# EUROPÄISCHE PATENTSCHRIFT

(11) **EP 1 065 084 B1**
(45) Veröffentlichungstag und Bekanntmachung des Hinweises auf die Patenterteilung: **05.04.2006**
(21) Anmeldenummer: 00113476.6
(22) Anmeldetag: 26.06.2000
(51) Int. Cl.: B60J 7/02

(54) **Gleitbacke für ein bewegliches Fahrzeugteil, insbesondere für ein Schiebedach**
Sliding pad for movable vehicle parts, in particular for a sliding roof
Patin à glissement pour une partie mobile de véhicule, en particulier pour toit coulissant

(30) Priorität: 01.07.1999 DE 19930365
(43) Veröffentlichungstag der Anmeldung: 03.01.2001
(73) Patentinhaber: Webasto Vehicle Systems International GmbH, 82131 Stockdorf (DE)
(72) Erfinder: Radmanic, Stjepan, 82291 Mammendorf (DE)
(74) Vertreter: Wiese, Gerhard

(56) Entgegenhaltungen:
- DE-A- 3 739 530
- DE-A- 3 813 049
- DE-A- 4 227 452
- DE-C- 4 107 129
- DE-C- 4 336 222
- FR-A- 2 693 687
- US-A- 4 114 945

## Beschreibung

Die Erfindung bezieht sich auf eine Gleitbacke für eine Führungsanordnung verstellbarer Fahrzeugteile, insbesondere Fahrzeugdächer und dgl., mit einem Gleitbackenträger und einer mit diesem verbunden Anordnung aus einem eine Gleitfläche aufweisenden Gleitkörper und einem Dämpferkörper aus unterschiedlichen Kunststoff-Werkstoffen.

Derartige Gleitbacken mit unterschiedlich harten Werkstoffen für Gleitkörper und Dämpferkörper, wobei letztgenannter weicher als erstgenannter ist, sind in den unterschiedlichsten Ausführungsformen bekannt. So ist es beispielsweise aus der DE 39 20 372 C1 bekannt, den Dämpferkörper aus Weichgummi auf den Gleitbackenträger aufsteckbar auszubilden und den aus relativ härterem Kunststoff bestehenden Gleitkörper in Gestalt einer Gleitkappe auf den Dämpferkörper aufzusetzen. Diese bekannte, ihre Funktion erfüllende Gleitbacke besteht demnach aus drei separaten Teilen, dem Gleitbackenträger, dem Dämpferkörper und dem Gleitkörper. Aufgrund dieser Dreiteiligkeit sind entsprechend viele Arbeitsgänge bei der Herstellung und beim Zusammenbau des Gleitbackens erforderlich. Ferner hat sich folgendes Problem herausgestellt: Der Dämpferkörper umschließt mit seinem weichen Werkstoff den harten und kantigen, insbesondere aus Blech bestehende Gleitbackenträger. Dieser Gleitbackenträger arbeitet sich während der Bewegung der Führungsanordnung, welcher er zugeordnet ist, in den auf ihn geschobenen Dämpferkörper ein, und verschleißt ihn, weshalb die Lebensdauer dieser Gleitbacke begrenzt ist.

Aus der DE 41 36 233 A1 ist ein weiterer Gleitbacken bekannt, bei dem auf ein stabiles Trägerteil ein Aufsteckteil aus Kunststoff aufgesteckt wird. Ein derartiger Gleitbacken weist aufgrund des stabilen Trägerteils schlechte Dämpfungseigenschaften auf.
Angesichts dieses Standes der Technik liegt der vorliegenden Erfindung die Aufgabe zugrunde, eine Gleitbacke der im Oberbegriff des Anspruchs 1 genannten Art zu schaffen, die unter geringem Arbeitsaufwand herstellbar ist und eine lange Lebensdauer gewährleistet. Außerdem soll durch die Erfindung ein einfaches und kostengünstiges Verfahren zur Herstellung dieser Gleitbacke bereitgestellt werden.

Gelöst wird diese Aufgabe hinsichtlich der Gleitbacke durch die Merkmale des Anspruchs 1 und hinsichtlich des Verfahrens durch die Merkmale des Anspruchs 5. Vorteilhafte Weiterbildungen der Erfindung sind in den Unteransprüchen angegeben.

Mit anderen Worten die Erfindung geht einen vollständig anderen Weg als der Stand der Technik, der den relativ weichen Dämpferkörper unmittelbar auf dem Gleitbackenträger anbringt und den Gleitkörper mit dem Dämpferkörper umschließend ausbildet. Die Erfindung sieht die Anordnung des relativ harten Gleitkörper unmittelbar auf dem typischerweise aus Metallblech bestehenden Gleitbackenträger vor, während der weichere Dämpferkörper im Bereich der Gleitfläche gewissermaßen eine nachgiebige Einlage im härteren Gleitkörper bildet.

Gemäß einem wesentlichen Aspekt der Erfindung ist der Gleitkörper als Kunststoffteil auf den Gleitbackenträger gespritzt, und der Dämpferkörper ist in einem Hohlraum des Gleitkörpers angeordnet, der zur Gleitfläche weisend geschlossen, jedoch an zumindestens einer Seitenwand offen ist. Die Ausbildung dieses zumindestens einseitig offenen Hohlraums im Gleitkörper erlaubt es, dem Werkstoff für den Dämpferkörper in den Hohlraum einzuspritzen. Demnach sieht das erfindungsgemäße Verfahren zur Herstellung der erfindungsgemäß ausgebildeten Gleitbacke vor, daß eine Anordnung aus Gleitbackenträger und zumindest einem unter Abstand von diesem positionierten Hohlraum-Formgebungsstempel mit Gleitkörper-Werkstoff umspritzt wird, daß der Hohlraum-Formgebungsstempel unter Belassung eines Hohlraums aus dem aufgespritzten Gleitkörper herausgezogen wird, und daß in den Hohlraum Dämpferkörper-Werkstoff eingespritzt wird.

Bei dem Werkstoff für den Gleitkörper handelt es sich bevorzugt um Poloyoxymethylen (POM) oder Polyethylen (PE), während der Werkstoff für den Dämpferkörper bevorzugt Äthylen-Propylen-Terpolymerisat (EPDM) oder Thermoplastisches Elastomer (TPE) umfaßt.

Die Erfindung schafft demnach im Gegensatz zum Stand der Technik keinen mehrteiligen Gleitbackenträger, sondern einen einteiligen Gleitbackenträger in Gestalt eines festen Verbunds aus Trägerblech, Gleitkörper und Dämpferkörper. Aufgrund dieses Verbundkörpers erübrigt sich der bisher notwendige zusätzliche Arbeitsgang des Aufsteckens des Kunststoffteils des Gleitbackens auf das Trägerteil. Dies hat den Vorteil, daß die Prozeßsicherheit erhöht ist. Außerdem gewährleistet dieser Verbundkörper eine robuste Verbindung der einzelnen Komponenten der Gleitbacke in bezug aufeinander. Insbesondere ist durch die innige Verbindung zwischen Gleitbackenträger und Gleitkörper aufgrund des Anspritzvorgangs gewährleistet, daß der Gleitbackenträger während der bestimmungsgemäßen Bewegung sich nicht in den Gleitkörper mit dem Dämpferkörper einarbeitet, was beim Stand der Technik zu dem vorstehend angeführten Nachteil eines vorzeitigen Verschleißes führt.

Nachfolgend wird ein Ausführungsbeispiel der Erfindung anhand der Zeichnung näher erläutert; es zeigt:
- Fig. 1: schematisch einen Teil einer Führungsanordnung für ein verstellbares Fahrzeugteil in Aufrißansicht mit einer Gleitbacke in Querschnittsansicht, und
- Fig. 2: den Schnitt durch die Anordnung von Fig. 1 entlang der Linie B-B, in Pfeilrichtung gesehen.

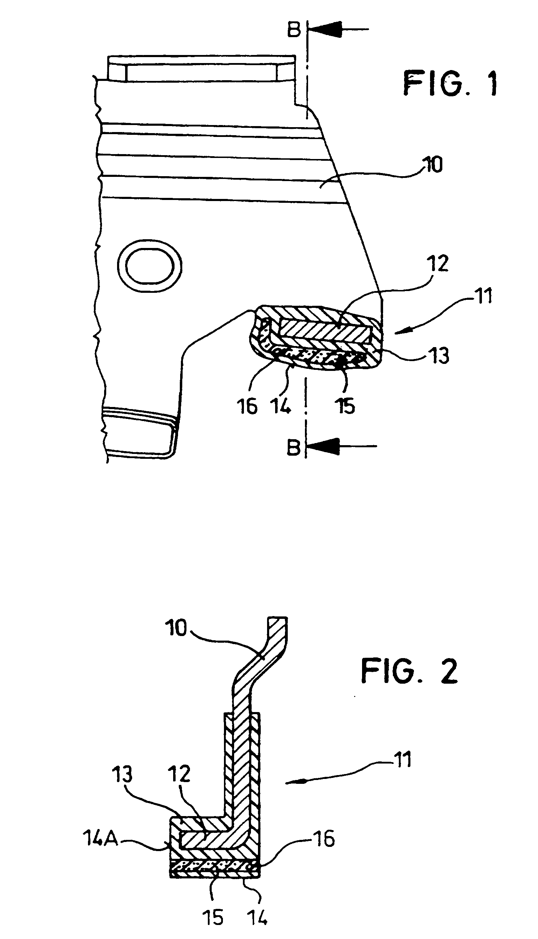

In Fig. 1 ist ein seitlicher Teil der Führungsanordnung eines im übrigen nicht gezeigten Deckels zum Verschließen der Dachöffnung eines Fahrzeugs gezeigt und allgemein mit der Bezugsziffer 10 bezeichnet. An einem seitlichen Vorsprung weist die Führungsanordnung 10 nach unten vorstehend eine Gleitbacke 11 auf. Die Gleitbacke 11 umfaßt einen Gleitbackenträger 12, der eine Blechlasche am seitlichen unteren Ende der Führungsanordnung 10 bildet. Der Gleitbackenträger 10 ist im Querschnitt rechteckig und unmittelbar von dem Gleitkörper 13 der Gleitbacke auf der Oberseite, der Unterseite und den beiden Längsseiten umschlossen. Der Gleitkörper 13 hat auf der Unterseite eine Gleitfläche 14, die sich außerdem in Form einer Gleitfläche 14A zu der innenliegenden Seite des Gleitbackenträgers 12 erstreckt, weil die Gleitbacke 11 auch auf dieser Seite in einer nicht gezeigten Gleitschiene seitlich geführt ist. Einwärts von der Gleitfläche 14 liegend hat der Gleitkörper 13 zwischen Gleitfläche 14 und dem Gleitbackenträger 12, einen Hohlraum 16, der bei der dargestellten Ausführungsform beidendig in die Stirnseiten des Gleitkörpers 13 ausmündet. In diesem Hohlraum ist ein Dämpferkörper 15 angeordnet, der den Hohlraum 16 vollständig ausfüllt.

Der Gleitkörper 13 besteht aus einem härteren Werkstoff als der Dämpferkörper 15, damit diese Körper ihre jeweilige Funktion erfüllen können. Bevorzugt ist als Werkstoff für den Gleitkörper Polyoxymethylen (POM) oder Polyethylen (PE) gewählt und für den Werkstoff des Dämpferkörpers 15 ist Äthylen-Propylen-Terpolymersiat (EPDM) oder Thermoplastisches Elastomer (TPE) gewählt.

Hergestellt wird die Gleitbacke derart, daß zunächst Gleitkörper-Werkstoff 13 auf den Gleitbackenträger 12 gespritzt wird. Bei diesem Umspritzen des Gleitbackenträgers 12 ist ein nicht gezeigter Formgebungsstempel mit entsprechenden Entformungsschrägen an der Stelle angeordnet, an welcher der Hohlraum 16 im Gleitkörper 13 gebildet werden soll und auch dieser Formgebungsstempel wird mit umspritzt. Daraufhin wird der Hohlraum-Formgebungsstempel unter Belassung des Hohlraums aus dem aufgespritzten Gleitkörper herausgezogen und in den zumindest einseitig offenen Hohlraum wird Werkstoff für den Dämpferkörper 15 eingespritzt.

### Bezugszeichenliste

- 10: Führungsanordnung
- 11: Gleitbacke
- 12: Gleitbackenträger
- 13: Gleitkörper
- 14, 14A: Gleitfläche
- 15: Dämpferkörper
- 16: Hohlraum

## Patentansprüche

1. Gleitbacke (11) für eine Führungsanordnung verstellbarer Fahrzeugteile, insbesondere Fahrzeugdächer und dgl., mit einem Gleitbackenträger (12) und einer mit diesem verbunden Anordnung aus einem eine Gleitfläche (14) aufweisenden Gleitkörper (13) und einem Dämpferkörper (15) aus unterschiedlichen Kunststoff-Werkstoffen, **dadurch gekennzeichnet, daß** der Gleitkörper (13) ein auf den Gleitbackenträger (12) gespritztes Kunststoffteil ist, das wenigstens einen zumindest einseitig offenen, zwischen Gleitfläche (14) und Gleitbackenträger (12) liegenden geschlossenen Hohlraum (16) aufweist, in welchem der Dämpferkörper (15) angeordnet ist.

2. Gleitbacke nach Anspruch 1, **dadurch gekennzeichnet, daß** der Dämpferkörper (15) ein in den Hohlraum (16) eingespritztes Kunststoffteil ist.

3. Gleitbacke nach Anspruch 1 oder 2, **dadurch gekennzeichnet, daß** der Gleitkörper-(Werkstoff), aus Polyoxymethylen (POM) oder Polyethylen (PE) besteht.

4. Gleitbacke nach Anspruch 1, 2 oder 3, **dadurch gekennzeichnet, daß** der Dämpferkörper-Werkstoff Äthylen-Propylen-Terpolymerisat (EPDM) oder Thermoplastisches Elastomer (TPE) umfaßt.

5. Verfahren zur Herstellung einer Gleitbacke für eine Führungsanordnung (10) verstellbarer Fahrzeugteile, insbesondere nach einem der Ansprüche 1 bis 4, **dadurch gekennzeichnet, daß** eine Anordnung aus Gleitbackenträger (12) und zumindest einem unter Abstand von diesem positionierten Hohlraum-Formgebungsstempel mit Gleitkörper-Werkstoff umspritzt wird, daß der Hohlraum-Formgebungsstempel unter Belassung eines Hohlraums (16) aus dem aufgespritzten Gleitkörper (13) herausgezogen wird, und daß in den Hohlraum Dämpferkörper-Werkstoff eingespritzt wird.

## Claims

1. Sliding pad (11) for a guide arrangement of displaceable vehicle parts, in particular vehicle roofs and the like, having a sliding pad carrier (12) and an arrangement connected to the latter comprising a sliding element (13) having a sliding surface (14) and a damper element (15) made of different plastic materials, **characterized in that** the sliding body (13) is a plastic part which is injection-moulded onto the sliding pad carrier (12) and has at least one closed cavity (16) which is open on at least one side, is located between sliding surface (14) and sliding pad carrier (12) and in which the damper element (15) is arranged.

2. Sliding pad according to Claim 1, **characterized in that** the damper element (15) is a plastic part injection-moulded into the cavity (16).

3. Sliding pad according to Claim 1 or 2, **characterized in that** the sliding element (material) consists of polyoxymethylene (POM) or polyethylene (PE).

4. Siding pad according to Claim 1, 2 or 3, **characterized in that** the damper element material comprises ethylenepropylene terpolymer (EPDM) or thermoplastic elastomer (TPE).

5. Method for the production of a sliding pad for a guide arrangement (10) of displaceable vehicle parts, in particular according to one of Claims 1 to 4, **characterized in that** an arrangement comprising sliding pad carrier (12) and at least one cavity-shaping die positioned at a distance from the latter is encapsulated in sliding element material by injection moulding, **in that** the cavity-shaping die is drawn out of the injection-moulded sliding element (13), leaving a cavity (16), and **in that** damper element material is injection-moulded into the cavity.

## Revendications

1. Patin de glissement (11) pour un dispositif de guidage de parties mobiles de véhicules, en particulier pour toits coulissants et similaires, avec un support de patin de glissement (12) et un dispositif relié avec celui-ci composé d'un corps de glissement (13), comportant une surface de glissement (14), et d'un corps d'amortissement (15) en différentes matières synthétiques, **caractérisé en ce que** le corps de glissement (13) est une pièce en matière synthétique appliquée au pistolet sur le support de patin de glissement (12), qui comprend une cavité fermée (16), au moins ouverte d'un côté, se trouvant entre la surface de glissement (14) et le support de patin de glissement (12), dans laquelle le corps d'amortissement (15) est agencé.

2. Patin de glissement selon la revendication 1, **caractérisé en ce que** le corps d'amortissement (15) est une pièce en matière synthétique injectée dans la cavité (16).

3. Patin de glissement selon la revendication 1 ou 2, **caractérisé en ce que** le corps de glissement (sa matière) est en polyoxyméthylène (POM) ou en polyéthylène (PE).

4. Patin de glissement selon la revendication 1, 2 ou 3, **caractérisé en ce que** la matière du corps d'amortissement comprend de l'éthylène-propylène-terpolymère (EPDM) ou de l'élastomère thermoplastique (TPE).

5. Procédé pour la fabrication d'un patin de glissement pour un dispositif de guidage de parties mobiles de véhicules, en particulier selon l'une quelconque des revendications 1 à 4, **caractérisé en ce qu'**un dispositif, composé d'un support de patin de glissement (12) et au moins d'un poinçon de modelage de cavité positionné à distance de celui-ci, est moulé avec de la matière de corps de glissement, **en ce que** le poinçon de modelage de cavité est retiré du corps de glissement (13) appliqué au pistolet, laissant une cavité (16), et **en ce que** de la matière de corps d'amortisseur est injectée dans la cavité.
